# EUROPEAN PATENT APPLICATION

(11) **EP 1 111 422 A2**
(43) Date of publication of application: **27.06.2001**
(21) Application number: 00124618.0
(22) Date of filing: 10.11.2000
(51) Int. Cl.: G02B 6/44

(54) **Optical fibre connection unit**

(30) Priority: 30.11.1999 GB 9928201
(71) Applicant: Tyco Electronics Raychem NV, 3010 Kessel-lo (BE)
(72) Inventor: Wambeke, Alain, 3440 Zoutleeuw (BE); Thijs, Danny, 3520 Zonhoven (BE); Peeters, Erik, 3001 Heverlee (BE)
(74) Representative: Beitsma, Gerhard Romano

(57) **Abstract**

A connection unit (I) for connecting optical fibre cables (20) comprises a housing (2) which includes at least one port (9) providing access for the optical fibre cables (20), and a base plate (3) having an upper surface (4), a front edge (5) and a rear edge (6). The base plate (3) is slidably mounted with respect to the housing (2) so as to be movable from a first position (i) in which it is received within the housing (2) to a second position (ii) in which at least the front edge (5) extends outwardly from the housing (2), the upper surface (4) of the base plate being arranged for mounting splicing means (7) and/or connecting means (8) for optical fibre cables (20). According to the present invention the connection unit is provided with a flexible fibre containment means (10) attached to and arranged underneath the base plate (3) and capable of containing optical fibre cables (20) connected to the splicing means (7) and/or the connection means (8).

## Description

The present invention relates to a connection unit for connecting optical fibres. More in particular, the present invention relates to a connection unit for connecting optical fibre cables comprising a housing having at least one port for providing access for the optical fibre cables, and a base plate having an upper surface, a front edge and a rear edge, the base plate being receivable within and slidably mounted with respect to the housing so as to be movable from a first position in which it is received within the housing to a second position in which at least the front edge extends outwardly from the housing, the upper surface of the base plate being arranged for mounting splicing means and/or connecting means for optical fibre cables.

An example of a connection unit having a slidably mounted base plate is disclosed in British patent application GB 2 293 891.

Optical fibre connection units or "shelves" of the kind described above are used in optical fibre distribution systems. Typically, the units are stacked in a rack and their base plates are arranged as drawers which can, at least partially, be pulled out of the rack so as to allow easy access to the devices installed in the unit. Such devices may for example comprise splice trays for splicing the cables into a plurality of constituent cables or fibres, or patching panels for connecting the cable(s) or fibres to so-called "pigtails" or further cables, or both splice trays and patching panels. The rack, typically accommodated in a housing so as to produce a fibre optical cable cabinet, often also comprises storage spools, splice supports and other auxiliary devices. Excess cable allowing the base plates to be pulled forward is usually stored in the rack behind the shelves.

It is noted that in this document the word "cable" is meant to refer to both single fibre and multiple fibre cables and therefore includes single optical fibres, so-called "pigtails" and "patchcords" and "jumpers".

The work involved in splicing and patching optical fibre cables requires great precision, as the optical fibres are thin and delicate. Also, incorrect splicing and patching leads to large signal losses, making the cable or fibre involved virtually useless. It is therefore imperative for an operator to gain easy access to the shelf or unit which he is working on. The drawer arrangement described above does allow access to devices contained in the unit. However, the movement of the drawer-like base plate of such a unit may damage the cables, in particular the excess length of cable which is often present in or at the unit. That is, the excess length of cable may become trapped between the housing and the movable base plate, thus potentially damaging the cables.

Dutch Patent NL1013718, published 6 June 2000, describes a drawer arrangement provided with an optical fibre containment member which is preferably made of a flexible material. This containment member is attached to the top front edge of the housing and the bottom rear end of the drawer so as to prevent any cables being trapped between the housing and the base plate. Although this arrangement is very effective in containing cables, it makes it difficult to remove the drawer from the housing.

Accordingly, it is an object of the present invention to provide a connection unit having a slidable base plate in which cables are prevented from being trapped between the housing and the base plate.

It is another object of the present invention to provide a connection unit of which the base plate can easily be removed from the housing.

It is yet another object of the present invention to provide a connection unit which is capable of storing excess cable lengths, in particular excess "pigtail" and/or "patchcord" lengths.

It is a further object of the present invention to provide a connection unit which is both compact and economical.

In order to meet these and other objects, a connection unit as mentioned in the preamble is according to the present invention characterised by flexible fibre containment means attached to and arranged underneath the base plate and capable of containing optical fibre cables connected to the splicing means and/or the connection means.

By providing fibre containment means capable of containing the optical fibre cables connected to the splicing means and/or connection means, excess cable length can be contained and prevented from being trapped between the parts of the connection unit. By arranging the fibre containment means underneath the base plate, a compact arrangement can be obtained. By making the fibre containment means flexible, the optical fibre cables are allowed more space and are thus better accessible when the base plate is extended from the housing while maintaining a compact arrangement when the base plate is received in the housing.

Advantageously, the fibre containment means comprises at least one flexible member having ends which are attached to base plate. By attaching the fibre containment means solely to the base plate it is ensured that the fibre containment means move with the base plate when it is pulled forward, pushed backward, or removed from the housing. Preferably, the ends of the fibre containment means are attached near the front and the rear edge of the base plate respectively, extending underneath the base plate to provide a storage area substantially defined by the containment means and the base plate. By using at least one flexible, preferably longitudinal, member a simple yet effective construction is achieved while maintaining accessibility at both sides of said member. Of course it is possible to attach the fibre containment means to, for example, the sides of the base plate but this has the disadvantages of providing less accessibility and resisting the movement of the fibre containment means within the housing.

In order to obtain a better containment of the optical fibres whilst still providing good accessibility the fibre containment means may comprise at least two substantially parallel flexible longitudinal members. However, the fibre containment means may be advantageously be comprised of a substantially "Y" shaped member or a substantially "H" shaped member. In such a case, the extremities of the flexible member are preferable attached at the edges, that is, the front and rear edges of the base plate.

The flexible fibre containment means are preferably made of rubber. Alternatively, any other flexible material such as plastic or even a thin metal film may be used.

The present invention further provides fibre containment means for use in a connection unit, as well as a rack for optical fibre management comprising at least one connection unit as described above.

The present invention will further be described with reference to exemplary embodiments illustrated in the accompanying drawings, in which:
Figure 1 shows, in cross-sectional view, a connection unit according to the present invention;
Figure 2 shows, in partial cross-sectional view, the connection unit of Fig. 1 in its extended state;
Figure 3 shows, in perspective view, a first embodiment of fibre containment means according to the present invention;
Figure 4 shows, in perspective view, a second embodiment of fibre containment means according to the present invention;
Figure 5 shows, in perspective view, a third embodiment of fibre containment means according to the present invention;
Figure 6 schematically shows, in front view, an optical fibre management rack in which a connection unit of the present invention is used.

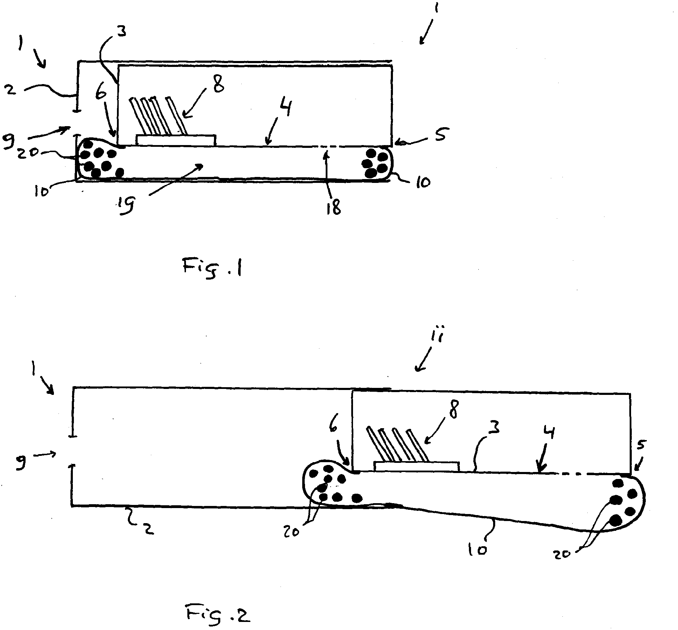

The connection unit or shelf 1 shown by way of non-limiting example in Fig. 1 comprises a housing 2 in which a base plate 3 is received. The housing 2 is provided with a port 9 which provides an entry/exit point for optical fibre cables 20. The base plate 3 is provided with mounting holes 18 for mounting splice trays, patching panels and the like. For the sake of simplicity of the drawing, only one set of splice trays 8 is shown. Although the base plate 3 shown is provided with side walls and a cover, these are not essential and may be omitted.

The base plate 3 is arranged in the housing 2 in such a way that it can be slid from the first position i shown in Fig. 1 to the second position ii shown in Fig. 2. Underneath the base plate 3 a space 19 is provided between the base plate 3 and the housing 2 for accommodating optical fibre cables 20, such as so-called "pigtails" connecting the splice trays 8 of the connection unit 1 to other connection units (not shown). In accordance with the present invention, fibre containment means 10 attached to the base plate 3 are provided to retain the fibre optic cables 20 in this area.

As shown in Fig. 2, in the second, extended the position ii, the optical fibre cables 20 are retained by the containment means 10, which prevents them from falling out of the connection unit 1. When moving the base plate 3 back into the housing, that is back into the first, received position i, the cables 20 present near the rear edge 6 of the base plate 3 will be pulled into the space 19 by the containment means 10. This effect is enhanced by the rolling of the containment means relative to the housing. That is, the bottom face of the containment means 10, that is the face touching the bottom of the housing 2, will move slower relative to the housing 2 than the face attached to the base plate 3, which will move with the base plate.

Similarly, when moving the base plate 3 back into the housing the cables 20 present near the front edge 5 of the base plate 3 are pulled into the housing by the containment means 10 to eventually attain the position shown in Fig. 1.

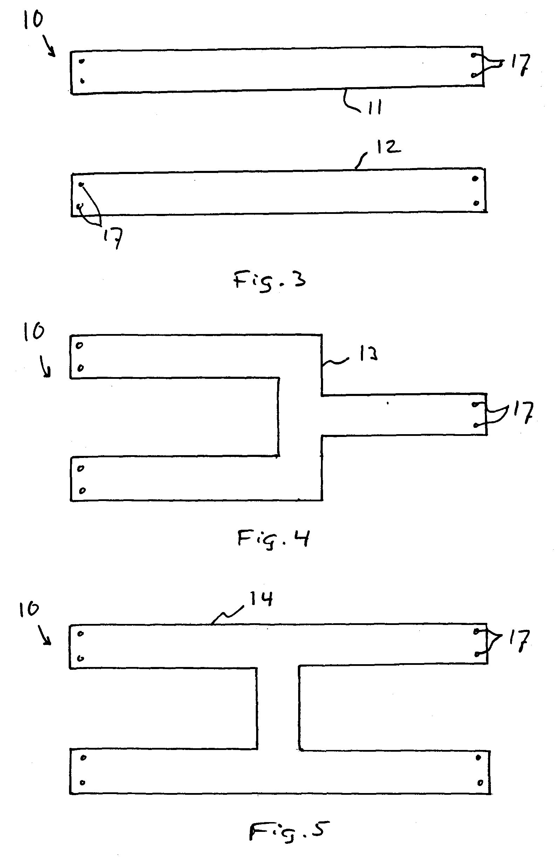

The embodiment of the flexible containment means 10 shown in Fig. 3 comprises two parallel flexible longitudinal members 11 and 12, both preferably made of rubber. The ends of the members 11 and 12 are preferably fixed to the front and rear edges respectively of the base plate 3 shown in Figs. 1 and 2. Alternatively, the longitudinal members could be made to each form a substantially closed loop and the joint of their ends could be fixed to a single point at the lower surface of the base plate 3. In either case, the members could be attached to the base plate by means of e.g. bolts which pass through mounting holes 17.

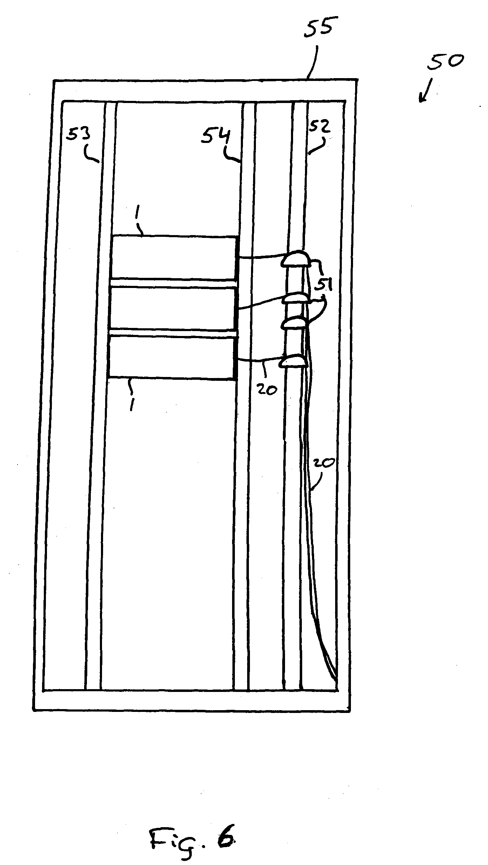

In the embodiment shown in Fig. 4 a single flexible member 13 having a "Y" shape constitutes the fibre containment means 10. The double ends of the "Y" are preferably attached to the front edge 5 of the base plate 3. Alternatively, a substantially "H" shaped member 14 as shown in Fig. 5 can be used. Compared to the embodiment of Fig. 3, the "H" shaped embodiment provides the advantage of better stability. It will be understood that other embodiments of the fibre containment means may also be used, for example, a single wide sheet of rubber or other flexible material, preferably provided with an access opening for accessing the cables. Other letter-shaped embodiments are also possible, such as an "N" or "X" shaped design.

The optical fibre management rack 50 schematically shown in Fig. 6 comprises a frame 55 in which vertical bars 52-54 are fitted. Connection units 1 are mounted on the bars 53 and 54. Vertical bar 52 serves to mount cable guide spools 51. Optical fibre cables 20 are supported and guided by the spools 51.

In the rack of Fig. 6, the connection units 1 are preferably provided with a fibre containment means according to the present invention in order to facilitate the management of the optical fibre cables 20.

It will be understood by those skilled in the art that the present invention is not limited to the embodiments shown and that many additions and modifications are possible without departing from the scope of the present invention as defined in the appending claims.

## Claims

1. Connection unit (1) for connecting optical fibre cables (20) comprising:
• a housing (2) having at least one port (9) for providing access for the optical fibre cables (20), and
• a base plate (3) having an upper surface (4), a front edge (5) and a rear edge (6),
the base plate (3) being receivable within and slidably mounted with respect to the housing (2) so as to be movable from a first position (i) in which it is received within the housing (2) to a second position (ii) in which at least the front edge (5) extends outwardly from the housing (2), the upper surface (4) of the base plate being arranged for mounting splicing means (7) and/or connecting means (8) for optical fibre cables (20),
**characterised by** flexible fibre containment means (10) attached to and arranged underneath the base plate (3) and capable of containing optical fibre cables (20) connected to the splicing means (7) and/or the connection means (8).

2. Connection unit according to claim 1, wherein the fibre containment means (10) comprises at least one flexible member (11) having ends which are attached near the front edge (5) and the rear edge (6) of the base plate (3) respectively.

3. Connection unit according to claim 2, wherein the fibre containment means (10) comprises at least two substantially parallel flexible longitudinal members (11, 12).

4. Connection unit according to claim 2, wherein the fibre containment means (10) comprises a substantially "Y" shaped flexible member (13).

5. Connection unit according to claim 2, wherein the fibre containment means (10) comprises a substantially "H" shaped flexible member (14).

6. Connection unit according to any of the preceding claims, wherein the flexible fibre containment means (10) is made of rubber.

7. Connection unit according to any of the preceding claims, wherein splicing means (7), connection means (8) and/or fibre storage means (9) are mounted on the base plate (3).

8. Fibre containment means (10) for use in a connection unit (1) according to any of the preceding claims.

9. Rack (50) for optical fibre management comprising at least one connection unit (1) according to any of claims 1 to 7.
